# EUROPÄISCHE PATENTSCHRIFT

(11) **EP 0 642 913 B1**
(45) Veröffentlichungstag und Bekanntmachung des Hinweises auf die Patenterteilung: **12.08.1998**
(21) Anmeldenummer: 94113565.9
(22) Anmeldetag: 31.08.1994
(51) Int. Cl.: B29C 47/50

(54) **Einwellenschnecke mit Zahnradpumpe**
Single screw extruder with gear pump
Extrudeuse à vis unique avec pompe à engrenages

(30) Priorität: 15.09.1993 DE 4331109
(43) Veröffentlichungstag der Anmeldung: 15.03.1995
(73) Patentinhaber: BAYER AG, 51368 Leverkusen (DE)
(72) Erfinder: Kohlgrüber, Klemens, Dr., D-51515 Kürten (DE); Holdenried, Günter, D-40764 Langenfeld (DE)

(56) Entgegenhaltungen:
- EP-A- 0 513 593
- CH-A- 469 546
- US-A- 4 642 040
- PATENT ABSTRACTS OF JAPAN vol. 8, no. 40 (M-278) 21. Februar 1984 & JP-A-58 197 034 (TOSHIBA KIKAI K.K.) 16. November 1983

## Beschreibung

Die Erfindung geht aus von einer Einwellenschnecke zur Förderung bzw. Extrusion hochviskoser Produkte mit einer eingebauten Zahnradpumpe, die aus zwei miteinander im Eingriff befindlichen Zahnrädern besteht, wobei das eine Zahnrad (Antriebszahnrad) mit der Schneckenwelle verbunden ist und von ihr angetrieben wird, während das andere Zahnrad (Gegenzahnrad) seitlich der Schneckenwelle in einem Gehäusefortsatz gelagert ist.

Die bekannten schraubenförmigen förderaktiven Elemente haben bei Einwellenschnecken nur einen verhältnismäßig niedrigen Pumpwirkungsgrad. Ein hoher Produktdruck kann daher - wenn überhaupt - nur mit einem förderaktiven schraubenförmigen Besatz aufgebaut werden, der eine ziemlich große Länge aufweist. Aus diesem Grund geht man in der Praxis so vor, daß der Schneckenmaschine eine Dosierpumpe vor- oder nachgeschaltet wird. Die Pumpe übernimmt dann weitgehend die Aufgabe des Druckaufbaus und der Förderung, während die Hauptaufgabe der Schnecke z. B. darin besteht, das Material zu plastifizieren und zu homogenisieren. Beide Anlagenteile müssen jedoch im Durchsatz genau aufeinander abgestimmt werden, so daß eine Drehzahlregelung für die Pumpe unumgänglich ist. Fördert z. B. eine Einwellenschnecke durch Fremddosierung nur geringfügig mehr als die nachgeschaltete Austragspumpe, so kommt es in der Schnecke zu einem Rückstau; sie wird überflutet und 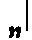 läuft über". Die Pumpe wirkt dabei auf den Extruder, bedingt durch die niedrigen Leckverluste wie ein nahezu verschlossenes Anlagenteil.

Aus US 4,642,040 ist ferner eine Extruderschnecke bekannt, an derem austrittsseitigen Ende eine Zahnradpumpe eingebaut ist. Die Zahnradpumpe ist als Zusatzbauteil am Extruderaustritt angeflanscht und wird über eine Kupplung von der Schneckenwelle angetrieben. Diese Konstruktion ist für die Realisierung einer zusätzlichen Druckaufbaustrecke am Extruderausgang prädestiniert. Das zugrunde liegende Konstruktionsprinzip erlaubt es jedoch nicht, eine Zahnradpumpe dieser Art an beliebiger Stelle der Schneckenlängsachse anzubringen; d. h. die Zahnradpumpe kann nicht direkt in die Schnecke integriert werden.

Es lag die Aufgabe zugrunde, eine Einwellenschneckenmaschine mit einem förderaktiven Besatz zu entwickeln, der die Erzeugung hoher Produktdrücke bei einer möglichst kurzen Verfahrenslänge ermöglicht und den Einsatz einer zusätzlichen geregelten Pumpe entbehrlich macht. Der förderaktive Besatz ohne separaten Antriebsmotor soll in der Schnecke an fast jeder beliebigen Stelle einbaubar sein.

Diese Aufgabe wird, ausgehend von einer mit einer Zahnradpumpe ausgerüsteten Einwellenschnecke erfindungsgemäß dadurch gelöst, daß
a) die Zahnradpumpe in die Schnecke integriert ist und das Antriebszahnrad formschlüssig auf die Schneckenwelle aufgeschoben ist
b) die Zahnräder an ihren beiden Stirnseiten von einem innerhalb des Schneckengehäuses angeordneten, feststehenden Pumpengehäuse umschlossen sind, das aus zwei auf die Schneckenwelle aufschiebbaren Abdichtungsplatten besteht, die formschlüssig mit dem Schneckengehäuse verbunden sind
c) die Abdichtungsplatten Öffnungen für den Durchtritt der Schneckenwelle und der Gegenzahnradachse aufweisen und
d) an den Abdichtungsplatten oder am Schneckengehäuse in Höhe der Abdichtungsplatten je ein zum Schneckenraum hin offenes Produktdurchtrittsfenster vorgesehen ist.

Die Abdichtungsplatten bilden also den sich quer zur Achse erstreckenden Teil des Pumpengehäuses, während der Längsteil des Pumpengehäuses mit dem gegenüber den Zahngrenzen liegenden Teilabschnitt des Schneckengehäuses identisch ist.

Alternativ kann aber auch der Längsteil des Pumpengehäuses aus einem ringförmigen, beidseitig an die Abdichtungsplatten bündig anschließenden Längsgehäuseteil bestehen, das die beiden Zahnkränze in axialer Richtung umschließt. Der Durchmesser der Zahnräder muß dann etwas kleiner sein als bei der vorstehend beschriebenen Ausführung.

Vorzugsweise haben die stirnseitigen Abdichtungsplatten und das ringförmige Längsgehäuseteil eine den Zahnrädern angepaßte achtförmige Kontur.

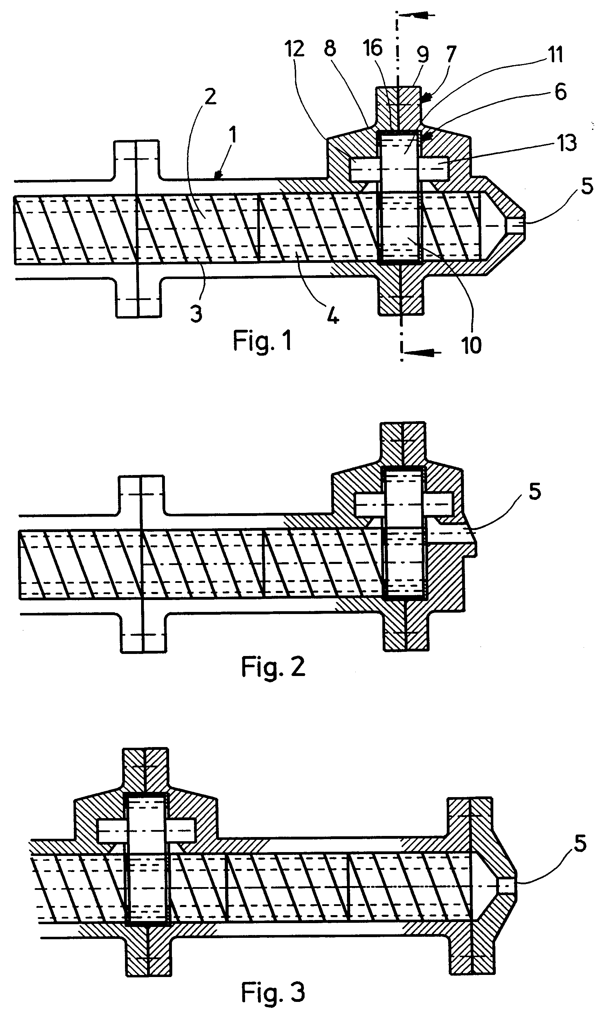

Gemäß einer bevorzugten Anwendung wird die Zahnradpumpe am Ende der Schneckenwelle, d.h. unmittelbar am Schneckenaustritt eingebaut (Fig. 1 und 2).

Mit der Erfindung werden folgende Vorteile erzielt:
- Da die Zahnradpumpe in die Einwellenschnecke integriert ist und der Antrieb über das auf die Schneckenwelle aufgeschobene Zahnrad erfolgt, ist im Gegensatz zu nachgeschalteten oder vorgeschalteten Dosierpumpen kein gesonderter Antrieb und insbesondere keine Durchsatzregelung erforderlich. Die Durchsatzabstimmung wird durch eine entsprechende Dimensionierung des Zahnradpaares gewährleistet.
- Im Gegensatz zu üblichen förderaktiven Einwellenschneckenelementen wird ein wesentlich höherer Pumpwirkungsgrad erzielt. Je nach Ausführung der erforderlichen Laufspiele kann man einen auf die Schneckenlängeneinheit bezogenen Druckaufbau erreichen, der um den Faktor 10 bis 1000 über konventionellen Druckaufbauabschnitten von Einwellenschnecken liegt.
- Der Einbau der Zahnradelemente einschließlich der dazugehörigen Gehäuseteile ist relativ einfach und problemlos. Das eine Zahnrad wird wie ein üblicher Schneckenbesatz auf die Schneckenwelle aufgesteckt. Das Gegenzahnrad wird bei geöffnetem Schneckengehäuse in einem seitlich untergebrachten Gehäusefortsatz montiert. Auch ein nachträglicher Einbau in vorhandene Schneckenmaschinen ist möglich, da nur relativ geringfügige Umrüstungen erforderlich sind.
- Die Zahnradpumpe kann an beliebiger Stelle der Schneckenlängsachse angebracht werden, insbesondere auch am produktseitigen Austritt der Einwellenschnecke.

Im folgenden wird ein Ausführungsbeispiel der Erfindung anhand von Zeichnungen näher erläutert. Es zeigen:
- Fig. 1 bis 3: verschiedene Ausführungsformen einer Einwellenschnecke mit integrierter Zahnradpumpe (verschiedene Einbaulagen)
- Fig. 4: die wesentlichen Bestandteile der integrierten Zahnradpumpe in Draufsicht (Längsschnitt) und
- Fig. 5: eine Frontansicht (Querschnitt) der Zahnradpumpe (in Achsenrichtung)

Bei der schematisch dargestellten Einwellenschnecke gemäß Fig. 1 bis 3 sind nur das Gehäuse 1 und die Schneckenwelle 2 mit verschiedenen schraubenförmig fördernden Schneckenbesätzen 3, 4 gezeigt. Die Besätze 3, 4 werden nacheinander auf die Schneckenwelle 2 aufgesteckt und sind z.B. mit Hilfe einer Nut/Federarretierung formschlüssig mit der Welle verbunden. Das zu behandelnde hochviskose Material wird von links nach rechts durch die Schnecke gefördert und durch den Schneckenaustritt 5 ausgetragen. Als neues Element kommt die in die Einwellenschnecke integrierte Zahnradpumpe 6 hinzu, die in einem seitlich angebrachten Gehäusefortsatz 7 eingebaut ist. Der Gehäusefortsatz 7 besteht aus einem mit dem Schneckengehäuse 1 verbundenen Teil 8 und einem abnehmbaren flanschartigen Teil 9. Die Hauptbestandteile der Zahnradpumpe 6 sind das auf die Schneckenwelle 2 aufgeschobene und mit ihr formschlüssig verbundene Zahnrad 10 und das im Gehäusefortsatz 7 gelagerte Gegenzahnrad 11. Zu diesem Zweck sind in den angesetzten Gehäuseteilen 8 und 9 Lagerstellen 12 und 13 eingearbeitet. Der Antrieb der Zahnradpumpe 6 erfolgt damit über das Schneckenzahnrad 10, das sich mit dem Gegenzahnrad 11 in Eingriff befindet. Die Schmierung der Lagerstellen 12, 13 erfolgt durch das geförderte hochviskose Produkt. Alternativ kann auch die bei Zahnradpumpen übliche Technik zur Lagerung und Schmierung der Zahnräder 10 und 11 verwendet werden. Zum Einbau der Zahnradpumpe wird der Gehäuseflansch 9 abgenommen.

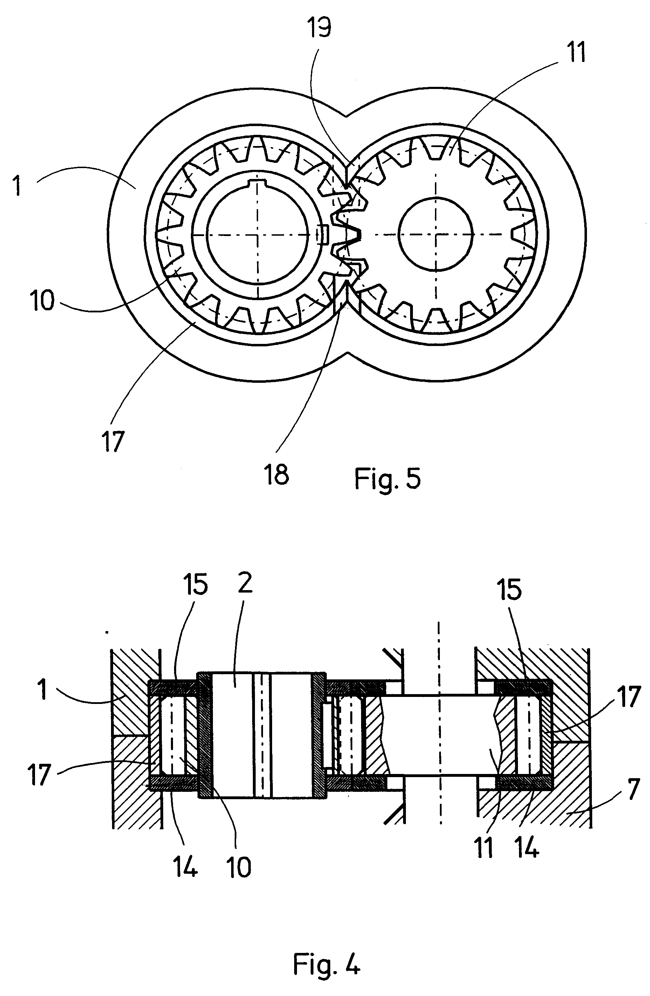

Wie in Fig. 4 und Fig. 5 gezeigt, sind die beiden Zahnräder 10 und 11 von einem innerhalb des Schneckengehäuses 1 angeordneten feststehenden Pumpengehäuse umschlossen. Das Pumpengehäuse ist formschlüssig mit dem Schneckengehäuse verbunden und besteht aus zwei achtförmigen Abdichtungsscheiben 14 und 15, die bündig an die Stirnseiten der Zahnräder 10 und 11 anschließen und mit Öffnungen für den Durchtritt der Schneckenwelle 2 und der Achse des Gegenzahnrads 11 versehen sind. Der Durchmesser der Zahnräder 10 und 11 kann kleiner sein als der Innendurchmesser des Schneckengehäuses 1. Außerdem kann der Durchmesser des Gegenzahnrads 11 kleiner sein als der Durchmesser der für die Unterbringung des Gegenzahnrads 11 im Gehäusefortsatz 7 vorgesehenen Pumpenkammer 16. Die Kopfkreise bzw. Zahnkränze der Zahnräder 10 und 11 werden dann durch ein ringförmiges, die Zahnräder in axialer Richtung umschließendes Längsgehäuseteil 17 abgedichtet. Das längsseitige Gehäuseteil kann auch mit einer der stirnseitigen Abdichtungsplatten 14 oder 15 zu einem Bauteil integriert werden.

Gemäß einer alternativen Ausführung kann das längsseitige Gehäuseteil 17 auch entfallen, wenn der Durchmesser der Zahnräder 10 und 11 so groß gewählt wird, daß - bis auf das notwendige Spiel - der Innenquerschnitt des Schneckengehäuses 1 und der Pumpenkammer 16 praktisch ausgefüllt wird. Es verbleiben dann lediglich die der Innenkontur des Schneckenraums und der Pumpenkammer 16 angepaßten achtförmigen Dichtungsplatten 14 und 15. Die achtförmigen Abdichtungsscheiben 14 und 15, können wie in Fig. 4 angedeutet, auch jeweils aus zwei Einzelteilen bestehen, die z.B. mit Hilfe von Stiften gegeneinander fixiert werden.

Wie in Fig. 5 gezeigt, erfolgt der Produkteintritt in die Zahnradpumpe durch ein Produkteintrittsfenster 18 unterhalb der Mittelebene im Zwickelbereich der Zahnräder 10 und 11. Das eingetragene Produkt wird durch die Zahnräder nach oben gefördert und verlaßt die Zahnradpumpe 6 durch ein rückseitiges Austrittsfenster 19 oberhalb der Mittelebene. Die Fenster 18 und 19 sind z.B. in der Weise ausgeführt, daß das längsseitige Pumpengehäuse 17 im Zwickelbereich etwas geöffnet wird (z.B. über ein Viertel der axialen Länge). Alternativ können die Produktdurchtrittsfenster auch durch eine entsprechende Erweiterung in Höhe der Abdichtungsscheiben 14 und 15 am Schneckengehäuse 1 gebildet werden. In diesem Fall sind die Abdichtungsplatten 14, 15 geschlossen.

Gemäß Fig. 2 ist die Zahnradpumpe 6 direkt am Austritt der Einwellenschnecke angeordnet. Das Produktaustrittsfenster 19 der Zahnradpumpe ist dann unmittelbar mit dem Schneckenaustritt 5 verbunden. Gemaß Fig. 3 ist die Zahnradpumpe 6 als Druckaufbaustrecke vor einem längeren Schneckenabschnitt eingebaut. Zur Montage der Zahnradpumpe (z.B. bei der Ausführung gemäß Fig. 2) werden bei geöffnetem Gehäuseteil 9 nacheinander die erste Abdichtungsscheibe 14, die beiden Zahnräder 10 und 11, der längsseitige Pumpengehäuseteil 17 und die Abdichtungsscheibe 15 eingesetzt. Danach wird die Zahnradpumpe durch Verschrauben des Gehäuseteils 9 verschlossen. Die leichte Montage ist im Hinblick auf Wartung und Service von großer Bedeutung.

Da die Zahnradpumpe in die Einwellenschnecke integriert ist, ist ihre Drehzahl und damit auch die Förderleistung stets mit der Schneckendrehzahl synchronisiert. Im Gegensatz zu den bisher bekannten Kombinationen von Einwellenschnecken und Förderpumpen, bei denen die Förderpumpe bzw. Dosierpumpe als getrenntes Anlagenteil der Schnecke vor- oder nachgeschaltet ist, kann die auf den Durchsatz der Schnecke abgestimmte Drehzahlregelung der Zahnradpumpe entfallen.

## Patentansprüche

1. Einwellenschnecke zur Förderung bzw. Extrusion hochviskoser Produkte mit einer eingebauten Zahnradpumpe, die aus zwei miteinander im Eingriff befindlichen Zahnrädern (10, 11) besteht, wobei das eine Zahnrad (Antriebszahnrad) (10) mit der Schneckenwelle (2) verbunden ist und von ihr angetrieben wird, während das andere Zahnrad (Gegenzahnrad) (11) seitlich der Schneckenwelle (2) in einem Gehäusefortsatz (7) gelagert ist, dadurch gekennzeichnet, daß
a) die Zahnradpumpe (6) in die Schnecke integriert ist und das Antriebszahnrad (10) formschlüssig auf die Schneckenwelle (2) aufgeschoben ist.
b) die Zahnräder (10, 11) an ihren beiden Stirnseiten von einem innerhalb des Schneckengehäuses (1) angeordneten, feststehenden Pumpengehäuse umschlossen sind, das aus zwei auf die Schneckenwelle (2) aufschiebbaren Abdichtungsplatten (14, 15) besteht, die formschlüssig mit dem Schneckengehäuse (1) verbunden sind
c) daß die Abdichtungsplatten (14, 15) Öffnungen für den Durchtritt der Schneckenwelle (2) und der Gegenzahnradachse aufweisen und
d) an den Abdichtungsplatten (14, 15) oder am Schneckengehäuse (1) in Höhe der Abdichtungsplatten (14, 15) je ein zum Schneckenraum hin offenes Produktdurchtrittsfenster (18, 19) vorgesehen ist.

2. Einwellenschnecke nach Anspruch 1, dadurch gekennzeichnet, daß das Antriebszahnrad (10) als Besatzelement auf die Schneckenwelle (2) aufsteckbar ist und ggf. weitere Schneckenbesätze (3, 4) zum Kneten oder Mischen vorgesehen sind.

3. Einwellenschnecke nach Anspruch 1 - 2, dadurch gekennzeichnet, daß der Längsteil des Pumpengehäuses durch den gegenüber den Zahnkränzen liegenden Teilabschnitt des Schneckengehäuses (1) gebildet wird.

4. Einwellenschnecke nach Anspruch 1 - 2, dadurch gekennzeichnet, daß das Pumpengehäuse zusätzlich ein ringförmiges, beidseitig an die Abdichtungsplatten (14, 15) bündig anschließendes Längsgehäuseteil (17) aufweist, daß die beiden Zahnkränze in axialer Richtung umschließt.

5. Einwellenschnecke nach Anspruch 1 bis 4, dadurch gekennzeichnet, daß die stirnseitigen Abdichtungsplatten (14, 15) und das Längsgehäuseteil (17) eine den Zahnrädern (10, 11) angepaßte achtförmige Kontur haben.

6. Einwellenschnecke nach Anspruch 1 bis 5, dadurch gekennzeichnet, daß die Zahnradpumpe (6) am Scheckenaustritt (5) eingebaut ist.

## Claims

1. Single-shaft worm for feeding or extruding highly viscous products with a built-in gear pump comprising two gear wheels (10, 11) in mesh with one another, the one gear wheel (driving gear wheel) (10) being connected to and driven by the worm shaft (2), while the other gear wheel (mating gear wheel) (11) is mounted laterally of the worm shaft (2) in a housing extension (7), characterized in that
a) the gear pump (6) is integrated into the worm and the driving gear wheel (10) is slipped positively onto the worm shaft (2),
b) the gear wheels (10, 11) at their two end faces are enclosed by a fixed pump housing, which is disposed inside the worm housing (1) and comprises two sealing plates (14, 15), which may be slipped onto the worm shaft (2) and are positively connected to the worm housing (1),
c) the sealing plates (14, 15) have openings for passage of the worm shaft (2) and of the mating gear wheel axle and
d) a product penetration window (18, 19), which is open towards the worm area, is provided at each of the sealing plates (14, 15) or at the worm housing (1) at the level of each of the sealing plates (14, 15).

2. Single-shaft worm according to claim 1, characterized in that the driving gear wheel (10) is mountable as a fitting element onto the worm shaft (2) and further worm fittings (3, 4) for kneading or mixing are optionally provided.

3. Single-shaft worm according to claim 1 - 2, characterized in that the longitudinal part of the pump housing is formed by the sub-section of the worm housing (1) lying opposite the ring gears.

4. Single-shaft worm according to claim 1 - 2, characterized in that the pump housing additionally comprises an annular longitudinal housing part (17), which adjoins the sealing plates (14, 15) in a flush manner and encloses the two ring gears in an axial direction.

5. Single-shaft worm according to claim 1 to 4, characterized in that the end sealing plates (14, 15) and the longitudinal housing part (17) have a figure-eight-shaped contour adapted to the gear wheels (10, 11).

6. Single-shaft worm according to claim 1 to 5, characterized in that the gear pump (6) is installed adjacent to the worm outlet (5).

## Revendications

1. Extrudeuse à vis unique destinée au transport ou à l'extrusion de produits fortement visqueux, comprenant une pompe à engrenages intégrée, laquelle est constituée de deux engrenages (10, 11) qui se trouvent en engrènement mutuel, l'un des engrenages (engrenage d'entraînement) (10) étant relié à l'arbre de vis (2) et entraîné par celui-ci, tandis que l'autre engrenage (engrenage complémentaire) (11) est monté latéralement par rapport à l'arbre de vis (2) dans un prolongement (7) du boîtier, caractérisée en ce que :
a) la pompe à engrenages (6) est intégrée dans la vis, et l'engrenage d'entraînement (10) est enfilé en coopération de formes sur l'arbre de vis (2);
b) les engrenages (10, 11) sont enfermés à leurs deux côtés frontaux par un boîtier de pompe fixe, agencé à l'intérieur du boîtier de vis (1), ledit boîtier de pompe étant constitué par deux plaques étanchéité (14, 15) susceptibles d'être enfilées sur l'arbre de vis (2), lesquelles sont reliées en coopération de formes avec le boîtier de vis (1);
c) les plaques d'étanchéité (14, 15) présentent des ouvertures pour la traversée de l'arbre de vis (2) et de l'axe de l'engrenage complémentaire; et
d) sur les plaques étanchéité (14, 15), ou sur le boîtier de vis (1) à hauteur des plaques étanchéité (14, 15), il est prévu une fenêtre respective (18, 19) pour la traversée du produit, ouverte vers la chambre de vis.

2. Extrudeuse à vis unique selon la revendication 1, caractérisée en ce que l'engrenage d'entraînement (10) est susceptible d'être enfilé sous forme d'un élément de garniture sur l'arbre de vis (2), et en ce qu'il est prévu le cas échéant d'autres garnitures de vis (3, 4) pour le pétrissage ou le mélange.

3. Extrudeuse à vis unique selon les revendications 1 et 2, caractérisé en ce que la partie longitudinale du boîtier de pompe est formée par un tronçon partiel du boîtier de vis (1), qui se trouve en vis-à-vis des couronnes dentées.

4. Extrudeuse à vis unique selon les revendications 1 et 2, caractérisée en ce que le boîtier de pompe comprend additionnellement une partie de boîtier longitudinale annulaire (17) qui se raccorde en affleurement des deux côtés aux plaques d'étanchéité (14, 15), ladite partie de boîtier enfermant en direction axiale les deux couronnes dentées.

5. Extrudeuse à vis unique selon les revendications 1 à 4, caractérisée en ce que les plaques d'étanchéité (14, 15) côté frontal et la partie de boîtier longitudinale (17) ont un contour en forme de 8 adapté aux engrenages (10, 11).

6. Extrudeuse à vis unique selon les revendications 1 à 5, caractérisée en ce que la pompe à engrenages (6) est montée à la sortie de la vis (5).
